# DEMANDE DE BREVET EUROPEEN

(11) **EP 1 739 881 A1**
(43) Date de publication de la demande: **03.01.2007**
(21) Numéro de dépôt: 05300536.9
(22) Date de dépôt: 30.06.2005
(51) Int. Cl.: H04L 12/28, H04Q 7/38, H04L 12/56

(54) **Détermination de la position d'une station de base puis d'un terminal dans un réseau LAN sans fil**

(71) Demandeur: ALCATEL, 75008 Paris (FR)
(72) Inventeur: Pinault, Francis, 92270, Bois-Colombes (FR); Monnerat, Michel, 31000, Toulouse (FR)
(74) Mandataire: Sciaux, Edmond

(57) **Abrégé**

Il consiste à :
- déterminer les localisations respectives d'un premier lot de points d'accès radio (TR1, ..., TR4) dits de référence, en utilisant par exemple un procédé de localisation par satellites, et émettre à partir de chacun de ces points d'accès radio de référence des signaux contenant la localisation de ce point d'accès de référence ;
- puis déterminer les localisations respectives d'au moins un deuxième lot de points d'accès radio (AP11, ..., AP33) en recevant des signaux émis par une pluralité de points d'accès radio appartenant au premier lot (RS1, RS2, RS3, RS4), et en appliquant un procédé de localisation utilisant les localisations respectives des points d'accès radio appartenant au premier lot (TR1, ..., TR4) ;
- puis déterminer la localisation du terminal sans fil (T2) en recevant des signaux émis par une pluralité de points d'accès radio (AP11, ..., AP13), dont la localisation a été déterminée précédemment, en appliquant un procédé de localisation utilisant les localisations respectives de points d'accès radio (AP11, ..., AP13) dont les localisations respectives ont été déterminée précédemment.

## Description

L'invention concerne : un procédé pour déterminer automatiquement la localisation d'un terminal dans un réseau local de télécommunication sans fil ; et des points d'accès radio adaptés pour la mise en oeuvre de ce procédé. Un service de localisation d'un terminal sans fil, dans un réseau local, a de nombreuses applications. En particulier, le service de localisation d'un terminal radiotéléphonique mobile à l'intérieur d'un bâtiment permettra à un centre d'appels de secours de localiser rapidement un usager en détresse.

Des procédés connus permettent de localiser un terminal mobile dans un réseau Bluetooth. Les terminaux Bluetooth ayant une portée courte (inférieure à 30 mètres), ces procédés sont basés généralement sur la proximité entre le terminal dont la position est à déterminer, et au moins un autre terminal dont la position est déjà connue. Selon un premier procédé, le terminal dont la position est inconnue demande à au moins un autre terminal Bluetooth qui est en communication avec lui, quelle est sa position, si elle est connue. Il apprend ainsi sa propre position. Une interpolation peut être faite entre plusieurs localisations si plusieurs autres terminaux Bluetooth sont en communication avec le terminal considéré. Un second procédé consiste, lorsqu'un terminal Bluetooth demande l'établissement d'un appel d'urgence, à envoyer d'un serveur de localisation à ce terminal demandeur, une requête de localisation. Le terminal demandeur émet alors un signal dit de balise qui active les terminaux Bluetooth situés au voisinage. Chacun de ces terminaux voisins envoie au serveur de localisation une information de localisation.

Des procédés connus permettent de localiser un terminal mobile dans un réseau Wifi (norme IEEE 802.11): Un premier procédé consiste à envoyer une requête à tous les points d'accès radio du réseau, pour leur demander quel est celui à qui est associé tel terminal dont on veut déterminer la localisation. Ensuite il consiste à lire, dans une table, la localisation du point d'accès qui a répondu.

Un deuxième procédé consiste à envoyer, à partir d'un serveur de localisation, une requête à tous les points d'accès radio du réseau, pour leur demander quels sont ceux qui peuvent percevoir le signal radio émis par tel terminal dont on veut déterminer la localisation. Ceux qui reçoivent ce signal radio émis par ce terminal mesurent son amplitude et communiquent cette mesure au serveur de localisation. Le serveur connaît le graphe théorique de la sensibilité en réception, dans le plan horizontal, pour chaque point d'accès. Pour une antenne omnidirectionnelle, ce graphe a théoriquement une forme circulaire pour une amplitude de signal donnée. Pour chaque amplitude de signal reçu, le serveur peut faire correspondre un cercle ayant un rayon déterminé, sur lequel doit être situé le terminal. Le serveur détermine l'intersection des cercles correspondant aux mesures faites par différents points d'accès qui ont réussi à capter le signal. La localisation dans un plan vertical peut être déterminée de manière analogue, pour connaître l'altitude.

Dans la réalité, le graphe n'est pas vraiment circulaire parce que la propagation des ondes radio est perturbée par des obstacles réfléchissants et des obstacles absorbants. Il en résulte une dégradation de la précision de la localisation. Un perfectionnement consiste à prédire, par un calcul, la forme réelle du graphe de sensibilité pour chaque point d'accès, c'est à dire corriger son graphe théorique de sensibilité, en prenant en compte chaque obstacle situé au voisinage de ce point d'accès. Il est alors possible de dresser une table de la sensibilité de chaque point d'accès, pour un ensemble de points de localisation régulièrement répartis sur toute la zone à couvrir (tout un immeuble par exemple). On améliore ainsi la précision de la localisation.

Ces procédés connus nécessitent tous de connaître la position de chacun des points d'accès radio. Il faut donc déterminer cette position, et la mettre à jour si un point d'accès radio est déplacé. Ceci implique des opérations manuelles d'autant plus coûteuses que le nombre de points d'accès radio est grand. D'autre part, ces opérations manuelles peuvent engendrer des erreurs.

Un procédé connu permet de localiser un terminal radiotéléphonique dans un réseau public de radiotéléphonie, de type GSM par exemple, sans connaître la position des stations de base. Ce procédé utilise un récepteur de positionnement par satellites GPS (Gobal Positioning System), intégré dans chaque terminal radiotéléphonique, pour déterminer la position de ce terminal. Ce procédé a pour inconvénient de ne pas fonctionner dans certains bâtiments où la réception des signaux des satellites GPS est trop faible. En outre, il prend environ trente secondes pour déterminer une localisation. Un perfectionnement, appelé GPS assisté, consiste à intégrer dans le réseau radiotéléphonique un récepteur GPS qui reçoit les mêmes signaux GPS, au même moment que le terminal, et qui peut prédire les signaux GPS que le terminal doit recevoir. Les caractéristiques de ces signaux prédits sont transmises du réseau de radiotéléphonie au terminal. Ce dernier est alors capable de déterminer sa position correctement à partir de signaux GPS plus faibles, mais il reste toujours des cas où la réception des signaux GPS est insuffisante.

Le but de l'invention est de remédier à ces inconvénients en proposant un procédé pour déterminer la localisation d'un terminal sans utiliser un récepteur GPS dans chaque terminal, et sans que des opérations manuelles soient nécessaires pour déterminer les positions respectives des points d'accès radio.

L'objet de l'invention est un procédé pour déterminer la localisation d'un terminal sans fil dans un réseau de télécommunication sans fil, comportant une pluralité de points d'accès radio ; caractérisé en ce qu'il consiste à :
- déterminer les localisations respectives d'un premier lot de points d'accès radio dits de référence, en appliquant un premier procédé de localisation, et émettre à partir de chacun de ces points d'accès radio de référence des signaux contenant la localisation de ce point d'accès de référence ;
- puis déterminer les localisations respectives d'au moins un deuxième lot de points d'accès radio en recevant des signaux émis par une pluralité de points d'accès radio appartenant au premier lot, et en appliquant un second procédé de localisation utilisant les localisations respectives d'une pluralité de points d'accès radio appartenant au premier lot ;
- puis déterminer la localisation dudit terminal sans fil en recevant des signaux émis par une pluralité de points d'accès radio appartenant au second lot, en appliquant un troisième procédé de localisation utilisant les localisations respectives de points d'accès radio du deuxième lot.

Le procédé ainsi caractérisé ne nécessite pas d'opérations manuelles pour déterminer les positions respectives des points d'accès radio appartenant au deuxième lot, parce que les localisations de ces points d'accès ont elles-mêmes été déterminées précédemment en faisant un calcul basé sur les localisations des points d'accès du premier lot de points d'accès radio. Ce calcul peut être entièrement automatisé. Il est donc possible de déplacer des points d'accès du deuxième lot, lors de restructurations de bureaux par exemple, sans nécessiter une intervention manuelle pour re-déterminer leurs localisations respectives.

La détermination des localisations respectives des points d'accès radio du premier lot est faite de préférence par des moyens automatiques spécifiques (tels qu'un récepteur GPS fixe associé à chaque point d'accès de référence). Mais, si on peut garantir que les points d'accès de référence ne seront jamais déplacés, la détermination peut être faite manuellement une fois pour toutes. Dans les deux cas, le coût de cette détermination est limité parce que le nombre de points d'accès de référence est très petit.

Si le réseau considéré est très étendu, le procédé selon l'invention consiste en outre à déterminer automatiquement les localisations respectives d'un n-ième lot de points d'accès radio en recevant des signaux émis par un (n-1 )ième lot, n étant un entier au moins égal à 3, en appliquant un procédé de localisation utilisant les localisations respectives des points d'accès radio du n-ième lot.

Le procédé ainsi caractérisé est itératif, ce qui permet la localisation d'un terminal même dans des zones éloignées des points d'accès radio de référence. La précision de la localisation diminue quand augmente le nombre d'itérations, mais cette précision est fonction aussi du nombre de points d'accès que peut capter chaque point d'accès lorsqu'il cherche à recevoir des signaux provenant d'autres points d'accès ayant précédemment déterminé leurs localisations respectives. Si la densité des points d'accès est suffisante, elle permet de recouper de nombreuses estimations d'une même localisation, et donc compenser la perte de précision causée par le nombre d'itérations.

L'invention a aussi pour objet un point d'accès radio, permettant de déterminer automatiquement la localisation d'au moins un autre point d'accès radio d'un réseau de télécommunication sans fil, caractérisé en ce qu'il comporte :
- des moyens pour recevoir des signaux radio émis par d'autres points d'accès et indiquant leurs localisations respectives ;
- des moyens pour déterminer automatiquement sa propre localisation, à partir des localisations indiquées dans ces signaux reçus, et à partir de mesures de temps ou d'amplitude, faites sur les signaux reçus ;
- et des moyens pour émettre ensuite des signaux radio contenant la localisation de ce point d'accès radio.

L'invention a aussi pour objet un point d'accès radio de référence, permettant de déterminer automatiquement la localisation d'au moins un autre point d'accès radio d'un réseau de télécommunication sans fil, caractérisé en ce qu'il comporte :
- des moyens pour fournir la localisation de ce point d'accès radio ;
- et des moyens pour émettre des signaux radio contenant la localisation de ce point d'accès radio.

L'invention sera mieux comprise et d'autres caractéristiques apparaîtront à l'aide de la description ci-dessous et des figures l'accompagnant :
- La figure 1 représente un exemple de réseau de télécommunication sans fil, dans lequel le procédé selon l'invention est mis en oeuvre .
- La figure 2 illustre trois étapes d'un exemple de mise en oeuvre du procédé selon l'invention pour déterminer la localisation d'un terminal.

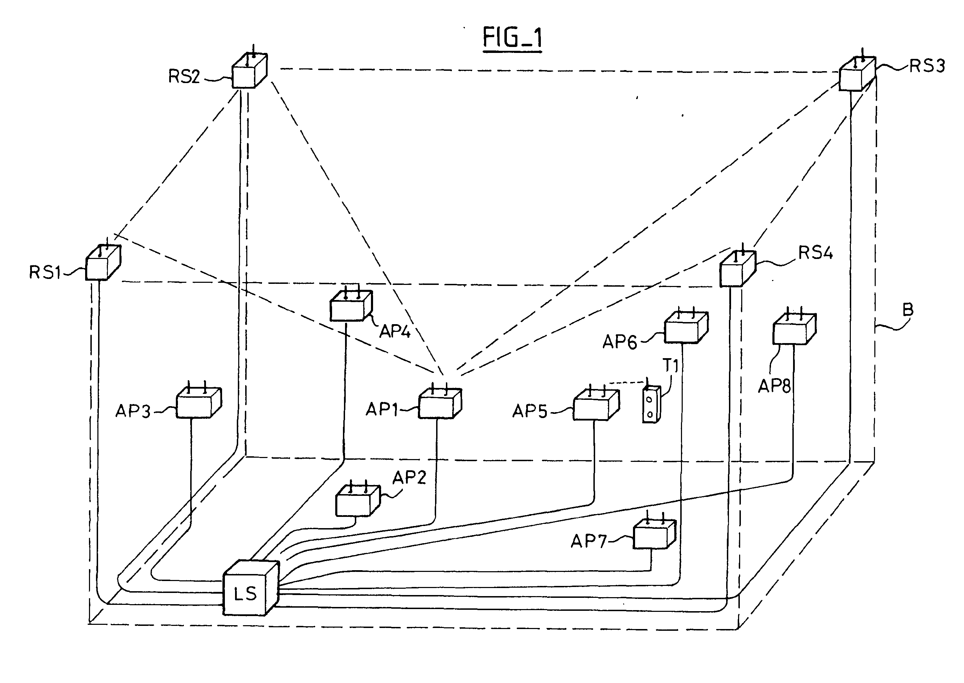

Le réseau représenté sur la **figure 1** est un réseau privé de télécommunication, sans fil, situé dans un bâtiment B et comportant des points d'accès radio AP1, ..., AP8, destinés à communiquer avec des terminaux tel que T1. Les points d'accès radio AP1, ..., AP8 sont conformes à la norme IEEE 802.11 g par exemple.

Ces points d'accès radio peuvent être déplacés occasionnellement lorsqu'on modifie l'agencement de bureaux, par exemple. Un terminal radio mobile T1 conforme à la norme IEEE 802.11 g peut communiquer avec un réseau local de transmission voix/données via l'un des points d'accès radio AP1, ..., AP8.

Pour permettre la localisation automatique des points d'accès radio AP1, ..., AP8, ce réseau privé comporte en outre quatre points d'accès radio RS1, RS2, RS3, RS4, dits de référence. Ces quatre points d'accès de référence ont des localisations respectives qui sont fixes. Par exemple, ils sont situées sur le toit du bâtiment B, aux quatre coins du bâtiment, et ils connaissent leurs localisations respectives parce qu'ils comportent chacune un récepteur GPS classique. Leur position sur le toit leur permet de recevoir les signaux GPS dans des conditions idéales. Le récepteur GPS calcule la localisation selon un procédé connu. Chaque points d'accès radio de référence, RS1, RS2, RS3, RS4, comporte en outre un émetteur-récepteur qui a la fonction de point d'accès radio selon la norme IEEE 802.11 g, et qui en outre émet périodiquement des signaux contenant l'identité et la localisation de ce point d'accès, afin qu'il puisse servir de référence de localisation pour d'autres points d'accès, tel que le point d'accès AP1 qui n'a pas de récepteur GPS et qui est situé dans une zone où la réception des signaux GPS serait impossible.

Selon une variante de mise en oeuvre, les localisations respectives des quatre points d'accès de référence RS1, RS2, RS3, RS4, sont déterminées une fois pour toutes par d'autres moyens (par exemple sont saisies manuellement, en lisant une carte) puis sont fournies respectivement à chacun point d'accès radio RS1, RS2, RS3, RS4.

Au contraire, les points d'accès AP1, ..., AP8 ont été installées à l'intérieur du bâtiment B, et ils peuvent être déplacées occasionnellement. Grâce au procédé selon l'invention, leurs localisations sont déterminées et mises à jour très rapidement, sans intervention humaine, de proche en proche, en commençant par les points d'accès les plus proches des quatre points d'accès de référence RS1, RS2, RS3, RS4, puis en progressant de proche en proche.

Les quatre points d'accès de référence RS1, RS2, RS3, RS4, et les points d'accès radio ordinaires AP1, ..., AP8 sont reliés à un réseau local classique, de type Ethernet par exemple, au moyens de liaisons filaires, ce réseau local comportant notamment un serveur de localisation LS. Les localisations respectives des points d'accès AP1, ..., AP8, et des terminaux tels que T1, sont mémorisées dans ce serveur de localisation LS pour être exploitées par divers services basés sur la localisation.

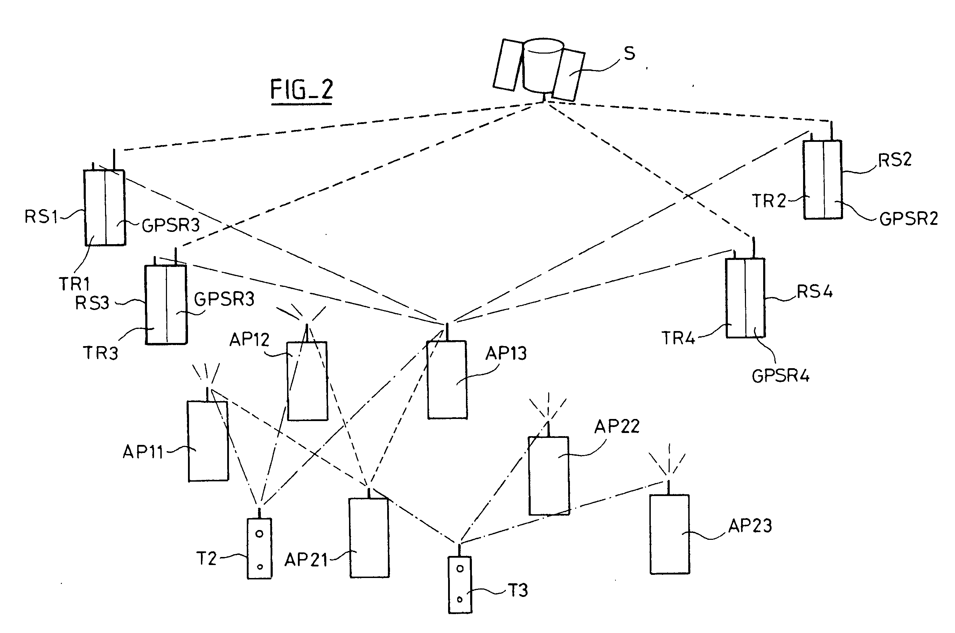

La **figure 2** illustre trois étapes d'un exemple de mise en oeuvre du procédé selon l'invention pour déterminer les localisations respectives de points d'accès AP11,..., AP23, et finalement déterminer la localisation d'un terminal T3. Les points d'accès de référence RS1, RS2, RS3, RS4 sont identiques. A titre d'exemple, le point d'accès de référence RS1 comporte :
- un récepteur, référencé GPSR, de radionavigation par satellites, de type GPS, qui reçoit des signaux d'une constellation de satellites S, et en déduit la localisation du point d'accès RS1 selon un procédé connu fournissant la longitude, la latitude, et l'altitude ;
- et un émetteur-récepteur radio TR analogue à un point d'accès radio conforme à la norme IEEE 802.11 g, dans cet exemple.

L'émetteur-récepteur radio TR comporte, en plus des moyens connus constituant un point d'accès radio conforme à la norme IEEE 802.11g, un logiciel qui le commande pour émettre, de manière répétitive, un signal contenant l'identité du point d'accès de référence RS1 et sa localisation déterminée par le récepteur GPSR de radionavigation par satellites.

Chaque point d'accès radio, AP13 par exemple, comporte des moyens connus constituant un point d'accès radio conforme à la norme IEEE 802.11 g, et comporte en outre un logiciel qui le commande pour :
- Recevoir des signaux provenant de points d'accès de référence, parmi les points d'accès RS1, ..., RS4 , ou provenant d'autres points d'accès radio identiques au point d'accès radio AP13. La détermination de la localisation nécessite de recevoir des signaux provenant d'au moins trois points d'accès de référence (RS1, RS2, RS3, RS4 par exemple) ou de points d'accès radio ordinaires dont les localisations respectives ont été déterminées précédemment.
- Déterminer automatiquement la localisation (la longitude, la latitude, et l'altitude) de ce point d'accès radio AP13, en appliquant un procédé de localisation connu, par exemple le procédé dit d'observation des différences de temps d'arrivée, pour des paquets de données provenant de ces points d'accès radio de référence ou autres points d'accès radio.
- Emettre de manière répétitive des signaux contenant l'identité et la localisation de ce point d'accès radio AP13, afin qu'il puisse servir, à son tour, de référence de localisation pour d'autres points d'accès, ou pour un terminal.

Les points d'accès AP11, AP12, AP13 déterminent leurs localisations respectives en utilisant les localisations des points d'accès de référence RS1, RS2, RS3, RS4, parce que ce premier lot de points d'accès AP11, AP12, AP13, est peu éloigné des points d'accès de référence RS1, RS2, RS3, RS4. Puis un deuxième lot de points d'accès AP21, AP22, AP23 détermine ses localisations respectives en utilisant les localisations respectives des points d'accès AP11, AP12, AP13 qui ont été déterminées précédemment, parce que ce deuxième lot est trop éloigné des points d'accès de référence RS1, RS2, RS3, RS4 pour pouvoir recevoir leurs signaux.

Par exemple, le point d'accès AP21 est trop éloigné des points d'accès de référence RS1, RS2, RS3, RS4 pour bien recevoir leurs signaux, ou bien il y a des sols ou des cloisons qui atténuent les signaux qu'il reçoit en provenance des points d'accès de référence. Par contre, le point d'accès AP21 reçoit bien les signaux émis par les points d'accès radio AP11, AP12, AP13. Il détermine donc sa position en fonctions des positions des points d'accès radio AP11, AP12, AP13, transmises de manière répétitive par ces points d'accès. De même, les points d'accès AP22 et AP23 déterminent leurs localisations respectives par rapport à d'autres points d'accès radio AP11, AP12, AP13 qui avaient précédemment déterminé leurs positions respectives, ou par rapport aux points d'accès de référence RS1, ..., RS4, ou un mélange des deux.

Selon une variante de réalisation, le calcul de la localisation d'un point d'accès n'est pas fait dans le point d'accès considéré mais dans le serveur de localisation LS. Chaque point d'accès comporte alors des moyens logiciels pour transmettre au serveur de localisation LS les valeurs des mesures utiles pour ce calcul, et le serveur LS comporte alors des moyens logiciels classiques pour faire le calcul de localisation.

Il suffit qu'un terminal reçoive des signaux d'au moins trois points d'accès, (points d'accès de référence, ou points d'accès ordinaires dont les localisations respectives ont été déterminées) pour qu'il soit possible de déterminer la localisation de ce terminal selon un procédé connu. Selon un mode de réalisation préférentiel, le calcul de la localisation d'un terminal est faite dans un serveur de localisation commun. Selon un autre mode de réalisation, chaque terminal comporte des moyens logiciels pour calculer lui-même sa localisation, puis la transmettre à un serveur de localisation pour centraliser toutes les localisations.

Par exemple, sur la figure 2, le terminal T2 détermine sa localisation en se basant sur les localisations des points d'accès AP13, AP12, AP13, parce qu'il est à proximité de ce premier lot de points d'accès. Il reçoit des signaux provenant des points d'accès radio de référence AP11, AP12, AP13. Il extrait de ces signaux les localisations respectives des trois points d'accès AP11, AP12, AP13, puis il détermine sa propre localisation à partir des localisations respectives de ces trois points d'accès, selon un procédé connu de localisation, par exemple selon le procédé dit d'observation des différences de temps d'arrivée des paquets de données.

La position du terminal T3 est déterminée par rapport aux points d'accès de référence AP21, AP22, AP23 parce qu'il est à proximité de ce deuxième lot de points d'accès. Il reçoit des signaux provenant des points d'accès radio AP21, AP22, AP23. Il extrait de ces signaux les localisations respectives des trois points d'accès AP21, AP22, AP23, puis il les transmet au serveur LS. Le serveur LS calcule la localisation du terminal T3 à partir des localisations respectives de ces trois points d'accès, selon un procédé connu de localisation, par exemple selon le procédé dit d'observation des différences de temps d'arrivée des paquets de données.

Ce procédé comporte une étape de mesure des temps d'arrivée de signaux reçus en un point donné (Terminal ou point d'accès radio dont la localisation est à déterminer) en provenance de différents points d'accès radio dont les localisations respectives sont déjà connues, ces signaux ayant été émis à des instants connus grâce à une horloge de référence commune :
- Soit chaque point d'accès émet de manière répétitive un signal comportant une étiquette temporelle correspondant à l'instant absolu d'émission de ce signal, et contenant sa localisation.
- Soit chaque point d'accès émet, de manière synchrone par rapport à une référence commune, un signal contenant sa localisation.

La localisation de chaque terminal ou point d'accès pourrait aussi bien être déterminée par un autre procédé consistant essentiellement à mesurer et exploiter les amplitudes respectives des signaux reçus. Ce procédé comporte :
- une étape de mesure des amplitudes respectives des signaux reçus en un point donné (Terminal ou point d'accès radio dont la localisation est à déterminer), en provenance de plusieurs points d'accès dont les localisations ont été déterminées et émettant avec des puissances respectives connues ;
- et une étape de calcul de distance entre ce point donné et chacun de ces points d'accès, en fonction des amplitudes respectives mesurées, et en fonction de conditions de propagation déterminées respectivement pour chacun de ces points d'accès.

Le calcul de la localisation d'un terminal peut être fait dans le terminal lui-même, mais il est fait de préférence dans un serveur de localisation tel que le serveur LS (figure 1) pour alléger les traitements dans le terminal. Le serveur a aussi pour fonction de centraliser les informations de localisations pour tous les terminaux du réseau considéré ; et éventuellement les informations sur les conditions de propagation déterminées respectivement pour chacun de ces points d'accès.

Si les points d'accès radio et les émetteurs-récepteurs des points d'accès de référence sont conformes à une autre norme, par exemple la norme Bluetooth ou WIMAX, le procédé selon l'invention peut être appliqué de manière analogue.

La localisation d'un point d'accès ou d'un terminal peut être calculée par tout procédé connu qui utilise la connaissance des localisations d'au moins trois points d'accès (ou point d'accès de référence) du voisinage. Ce qui importe c'est le fait que la connaissance de ces localisations est acquise itérativement en partant des points d'accès de référence, et en commençant par les points d'accès qui sont capables de recevoir des signaux émis par les points d'accès de référence.

La localisation des autres points d'accès puis des terminaux est poursuivie itérativement. Elle consiste à déterminer automatiquement les localisations respectives d'un n-ième lot de points d'accès radio en recevant des signaux émis par un (n-1)ième lot, n étant un entier au moins égal à 3, en appliquant un procédé connu de localisation utilisant les localisations déterminées pour le n-ième lot de points d'accès radio.

## Revendications

1. Procédé pour déterminer la localisation d'un terminal sans fil (T3) dans un réseau de télécommunication sans fil, comportant une pluralité de points d'accès radio (TR1, ..., TR4, AP11, ..., AP23) ; **caractérisé en ce qu'**il consiste à :
- déterminer les localisations respectives d'un premier lot de points d'accès radio (TR1, ..., TR4) dits de référence, en appliquant un premier procédé de localisation, et émettre à partir de chacun de ces points d'accès radio de référence des signaux contenant la localisation de ce point d'accès de référence ;
- puis déterminer les localisations respectives d'au moins un deuxième lot de points d'accès radio (AP11, AP12, AP13) en recevant des signaux émis par une pluralité de points d'accès radio appartenant au premier lot (TR1, ..., TR4), et en appliquant un second procédé de localisation utilisant les localisations respectives d'une pluralité de points d'accès radio appartenant au premier lot (TR1, ..., TR4) ;
- puis déterminer la localisation dudit terminal sans fil (T2) en recevant des signaux émis par une pluralité de points d'accès radio appartenant au second lot (AP11, ..., AP13), en appliquant un troisième procédé de localisation utilisant les localisations respectives de points d'accès radio (AP11, ..., AP13) du deuxième lot.

2. Procédé selon la revendication 1, **caractérisé en ce qu'**il consiste en outre à déterminer automatiquement les localisations respectives d'un n-ième lot de points d'accès radio (AP21, ..., AP23) en recevant des signaux émis par un (n-1)ième lot, n étant un entier au moins égal à 3, en appliquant un procédé de localisation utilisant les localisations respectives des points d'accès radio du n-ième lot.

3. Procédé selon la revendication 1, **caractérisé en ce que** le premier procédé de localisation utilise un système de navigation par satellites.

4. Procédé selon la revendication 1, **caractérisé en ce que** le second et le troisième procédé de localisation, pour n au moins égale à deux, comportent une étape de mesure des temps d'arrivée de signaux reçus en un point d'accès donné, en provenance de différents points d'accès.

5. Procédé selon la revendication 4, **caractérisé en ce que** chaque point d'accès émet de manière répétitive un signal comportant une étiquette temporelle correspondant à l'instant absolu d'émission de ce signal, et contenant sa localisation.

6. Procédé selon la revendication 4, **caractérisé en ce que** chaque point d'accès émet, de manière synchrone par rapport à une référence commune, un signal contenant sa localisation .7) Procédé selon la revendication 1, **caractérisé en ce que** le second et le troisième procédé de localisation comportent :
- une étape de mesure des amplitudes respectives des signaux reçus en un point donné, en provenance de plusieurs points d'accès émettant avec des puissances respectives connues ;
- et une étape de calcul de distance entre ce point donné et chacun de ces points d'accès, en fonction des amplitudes respectives mesurées, et en fonction de conditions de propagation déterminées respectivement pour chacun de ces points d'accès.

7. Procédé selon l'une des revendications 4 ou 5, **caractérisé en ce que** les valeurs mesurées sont transmises à un serveur central (LS) ; et **en ce que** les calculs de distances et de localisation des points d'accès sont réalisés dans ce serveur central.

8. Point d'accès radio (AP11, ....., AP13) permettant de déterminer automatiquement la localisation d'au moins un autre point d'accès radio (AP21) d'un réseau de télécommunication sans fil, **caractérisé en ce qu'**il comporte :
- des moyens pour recevoir des signaux radio émis par d'autres points d'accès (RS1, ..., RS4) et indiquant leurs localisations respectives ;
- des moyens pour déterminer automatiquement sa propre localisation, à partir des localisations indiquées dans ces signaux reçus, et à partir de mesures de temps ou d'amplitude, faites sur les signaux reçus ;
- et des moyens pour émettre ensuite des signaux radio contenant la localisation de ce point d'accès radio (AP21) .

9. Point d'accès radio de référence (RS1), permettant de déterminer automatiquement la localisation d'au moins un autre point d'accès radio (AP21) d'un réseau de télécommunication sans fil, **caractérisé en ce qu'**il comporte :
- des moyens pour fournir la localisation de ce point d'accès radio ;
- et des moyens pour émettre des signaux radio contenant la localisation de ce point d'accès radio.

10. Point d'accès radio de référence (RS1) selon la revendication 10, **caractérisé en ce que** les moyens pour fournir la localisation de ce point d'accès radio comportent un récepteur de navigation par satellites (GPSR) .
